# EUROPÄISCHE PATENTSCHRIFT

(11) **EP 1 418 111 B1**
(45) Veröffentlichungstag und Bekanntmachung des Hinweises auf die Patenterteilung: **23.04.2008**
(21) Anmeldenummer: 03016622.7
(22) Anmeldetag: 30.07.2003
(51) Int. Cl.: B62D 1/16, F16D 1/08, F16B 2/14

(54) **Auf einem Mantelrohr befestigbares Lenksäule-Nabemodul**
Hub module to be fixed on a steering column jacket
Moyeu montable sur tube de colonne de direction

(30) Priorität: 08.11.2002 DE 10253413
(43) Veröffentlichungstag der Anmeldung: 12.05.2004
(73) Patentinhaber: Valeo Schalter und Sensoren GmbH, 74321 Bietigheim-Bissingen (DE)
(72) Erfinder: Simonis, Karl, 75428 Illingen (DE); Horst, Daniel, 74321 Bietigheim-Bissingen (DE)
(74) Vertreter: Dreiss, Fuhlendorf, Steimle & Becker

(56) Entgegenhaltungen:
- EP-A- 0 145 974
- DE-A1- 19 720 050
- FR-A1- 2 702 016
- US-A1- 4 972 732
- US-A1- 5 590 565

## Beschreibung

Die Erfindung betrifft ein auf einem Mantelrohr befestigbares Lenksäulenmodul mit einem Modulträger, welcher auf das Mantelrohr aufschiebbar ist.

Aus dem Stand der Technik (z.B. DE-A-197 20 050) ist bekannt, dass Lenksäulenmodule zum Beispiel mittels Schellen, Keilen oder ähnlichen Mitteln an einem Mantelrohr einer Lenksäule befestigbar sind. Bei diesen bekannten Befestigungsmethoden wird durch die Befestigung immer ein Achsversatz generiert, der sich negativ auf die Geräuschentwicklung und speziell auf die Winkelausgabe des integrierten Lenkwinkelsensors auswirkt.

Aus der US-A-4 972 732 ist eine Lenksäule bekannt. welche mittels konischen Hülsen und einer Spreizvorrichtung in einem Gehäuse befestigt ist. Eine Fixierung durch Befestigung des Lenkrades kann dabei aber nicht erfolgen.

Der Erfindung liegt die Aufgabe zugrunde, ein Lenksäulenmodul bereitzustellen, bei welchem der Achsversatz ausgeglichen ist und sich die Geräuschentwicklung auf ein Minimum reduziert und die Winkelausgabe des Lenkwinkelsensors nicht nachteilig beeinträchtigt wird.

Diese Aufgabe wird mit einem Lenksäulenmodul gelöst, das die Merkmale des Anspruchs 1 aufweist.

Durch die erfindungsgemäße Ausgestaltung des Lenksäulenmoduls wird die Möglichkeit geschaffen, dieses exakt zur Position des Lenkrads auszurichten und am Mantelrohr zu befestigen. Hierzu werden die beiden Spannhülsen axial gegeneinander verschoben, wodurch sich der Durchmesser der einen Spannhülse vergrößert und der Durchmesser der anderen Spannhülse verkleinert. Dies wird dadurch bewirkt, dass die Spannhülsen mit ihren kegelstumpfförmigen Stirnseitenflächen quasi ineinandergeschoben werden. Durch die Durchmesseränderung werden die Spannhülsen sowohl an die Außenoberfläche des Mantelrohrs als auch an die Innenoberfläche des Modulträgers gepresst und verspannen dadurch den Modulträger mit dem Mantelrohr. Dies kann in jeder axialen Lage des Modulträgers bezüglich des Mantelrohrs erfolgen. Vorzugsweise sind alle kegelstumpfförmigen Flächen mit dem gleichen Neigungswinkel hergestellt.

Gemäß einem bevorzugten Ausführungsbeispiel weist der Modulträger an seinem dem Lenkrad abgewandten Ende eine konische beziehungsweise kegelstumpfförmige Verengung auf, an welcher eine kegelstumpfförmige Außenfläche der ersten Spannhülse anliegt. Dies führt dazu, dass die erste Spannhülse nicht nur über die zweite Spannhülse sondern auch über die kegelstumpfförmige Verengung des Modulträgers verpresst wird.

Um ein Aufweiten beziehungsweise ein Einschnüren der Spannhülse relativ einfach zu ermöglichen, sind die erste und/oder die zweite Spannhülse mit einem achsparallel oder wendelförmig verlaufenden Schlitz längsgeschlitzt. Da die Durchmesseränderung sich in einem sehr engen Bereich abspielt, kann die Schlitzbreite wenige Millimeter betragen.

Bei einem Ausführungsbeispiel ist vorgesehen, dass die zweite Spannhülse zwischen der ersten Spannhülse und dem Druckelement angeordnet ist. Dabei erstreckt sich die erste Spannhülse über mehr als 50 % der axialen Ausdehnung des Modulträgers. Außerdem ist die erste Spannhülse länger als die zweite Spannhülse.

Um die Drehbewegung des Lenkrads vom Modulträger abzukoppeln, weist das Druckelement ein axiales Drucklager auf. Dieses Drucklager ist als Rollenlager ausgebildet und vorzugsweise in das Druckelement integriert.

Um den produktionsbedingten Axialversatz des Lenkrads auf der Lenksäule auszugleichen, ist das Druckelement mit einer Axialdruckfeder versehen und komprimierbar. Auf diese Weise kann der Axialversatz, der ± 5 mm betragen kann, ausgeglichen werden. Von Vorteil ist, dass unabhängig von diesem Axialversatz der Modulträger mit voreingestelltem Abstand zum Lenkrad am Mantelrohr befestigt wird.

Eine optimale Übertragung der Druckkräfte wird dadurch erzielt, dass die erste und/oder die zweite Spannhülse aus Metall, zum Beispiel Messing, Aluminium oder einem anderen weichen Metall, oder aus Kunststoff, zum Beispiel Polyoxymethylen, Polyformaldehyd oder Polyacetal(POM), besteht beziehungsweise bestehen. Diese Werkstoffe sind druckbeständig, das heißt besitzen eine geringe Fließneigung, und sind resistent gegen im Kraftfahrzeugbereich anfallende Stoffe, wie Schmiermittel und andere Fluide.

Eine Verdrehung des Lenksäulenmoduls bezüglich des Mantelrohrs wird dadurch verhindert, dass der Modulträger eine Axialbohrung aufweist, in welche ein Arretierbolzen einsetzbar ist, der in eine im Mantelrohr vorgesehene Längsnut eingreift. Aufgrund der Längsnut kann der Modulträger in axialer Richtung auf dem Mantelrohr verschoben werden, eine Verdrehung ist jedoch nicht möglich.

Erfindungsgemäß weist der Arretierbolzen ein Spreizelement auf, über welches er direkt oder indirekt in der Axialbohrung spielfrei gehalten ist. Sobald der Bolzen in die Längsnut des Mantelrohrs eingreift, wird er über das Spreizelement in der Axialbohrung fixiert. Hierdurch wird auch eine Geräuschentwicklung, zum Beispiel Klappern, vermieden.

Das Spreizelement wird erfindungsgemäß mittels einer Feder betätigt, wobei das Spreizelement unmittelbar nach dem Ausfahren und Anliegen des Bolzens in der Längsnut aktiviert wird.

Weitere Vorteile, Merkmale und Einzelheiten ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist.

In der Zeichnung zeigen:
- Figur 1: einen Längsschnitt durch ein auf einem Mantelrohr befestigtes Lenksäulenmodul;
- Figur 2: eine vergrößerte Widergabe des Ausschnitts II gemäß Figur 1;
- Figur 3: eine Explosionsdarstellung des Lenksäulenmoduls;
- Figur 4: einen Längsschnitt durch das Lenksäulenmodul mit in das Mantelrohr eingreifendem Arretierbolzen; und
- Figur 5: eine perspektivische Darstellung des Schnitts gemäß Figur 4.

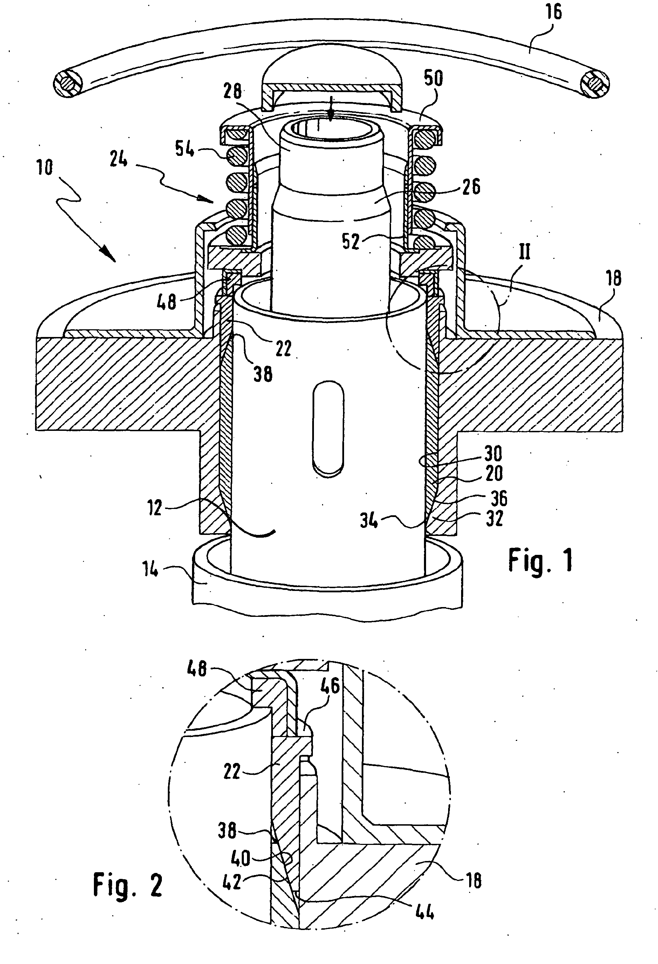

Die Figur 1 zeigt in schematischer Darstellung ein insgesamt mit 10 bezeichnetes Lenksäulenmodul, welches auf dem freien Ende eines Mantelrohrs 12 einer insgesamt mit 14 bezeichneten Lenksäule befestigt ist. Oberhalb des Lenksäulenmoduls 10 ist stark schematisch ein Lenkrad 16 angedeutet. Das Lenksäulenmodul 10 weist einen Modulträger 18 auf, zwischen welchem und dem Mantelrohr 12 zwei Spannhülsen 20 und 22 angeordnet sind. Auf der zweiten Spannhülse 22 sitzt ein Druckelement 24 auf, welches beim Befestigen des Lenkrads 16 auf einem Konus 26 der Lenkwelle 28 komprimiert wird und dabei die zweite Spannhülse 22 in Richtung der ersten Spannhülse 20 drängt.

Aus der Figur 1 ist erkennbar, dass im unteren Bereich des Modulträgers 18 die Aufnahmeöffnung 30 konisch beziehungsweise kegelstumpfförmig sich verengt. An diesem Kegelstumpf 32 liegt der untere Stirnseitenbereich 34 der zweiten Spannhülse an, wobei dieser Stirnseitenbereich eine kegelstumpfförmige Außenfläche 36 aufweist. Der obere Stirnseitenbereich 38 ist entsprechend geformt, sodass dessen Außenfläche 40 ebenfalls kegelstumpfförmig ist, was deutlich aus der Figur 2 erkennbar ist.

An dieser Außenfläche 40 liegt die Innenfläche 42 des Stirnseitenbereichs 44 der zweiten Spannhülse 22 an. Dies bedeutet, dass die zweite Spannhülse 22 die erste Spannhülse 20 geringfügig übergreift.

Auf der Oberseite 46 der zweiten Spannhülse 22 liegt das Druckelement 24 auf und schiebt die zweite Spannhülse 22 in Richtung der ersten Spannhülse 20. Dieses Druckelement 24 weist in seinem unteren Bereich ein Axialdrucklager 48 auf, wodurch Drehbewegungen des Lenkrads 16 vom stationären Lenksäulenmodul 10 entkoppelt werden. Außerdem ist das Druckelement 24 komprimierbar ausgebildet, was dadurch erfolgt, dass zwei hülsenförmige Elemente 50 und 52 axial ineinanderschiebbar sind. Die hülsenförmigen Elemente 50 und 52 werden in unbelastetem Zustand von einer Feder 54 auseinandergeschoben. Diese Feder 54 wird beim Aufsetzen und Festschrauben des Lenkrads 16 auf die Lenkwelle 28 komprimiert. Die dabei entstehende Axialkraft wird vom Druckelement 24 auf die Oberseite 26 der zweiten Spannhülse 22 übertragen, die geringfügig auf die erste Spannhülse 20 aufgeschoben wird. Dabei wird der Durchmesser der zweiten Spannhülse 22 vergrößert und der Durchmesser der ersten Spannhülse 20 verkleinert, was noch dadurch unterstützt wird, dass die erste Spannhülse 20 zwischen den Kegelstumpf 32 und das Mantelrohr 12 geschoben wird.

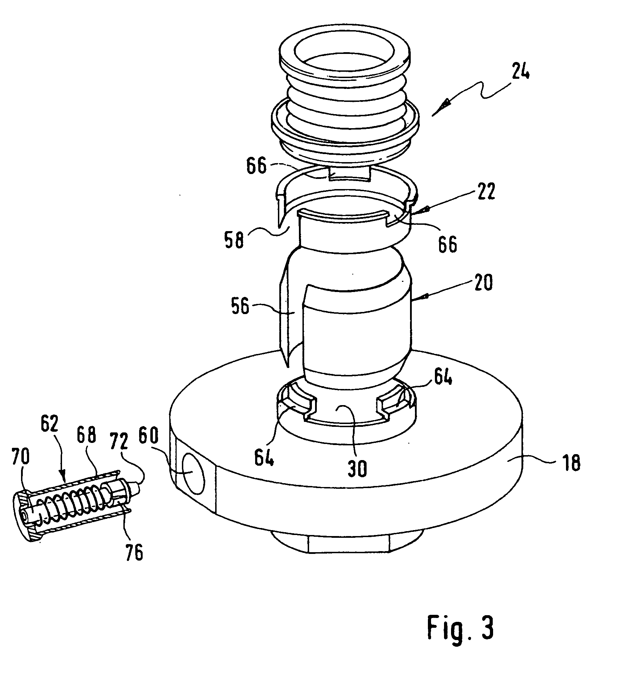

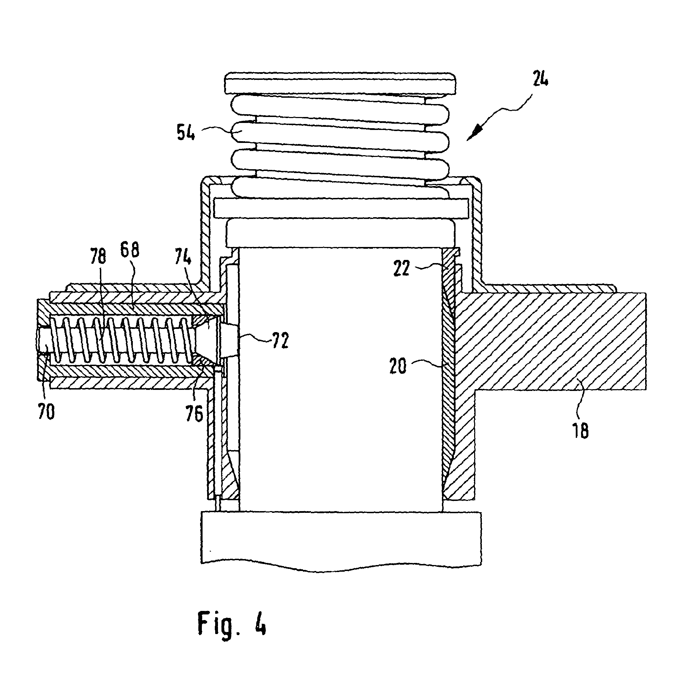

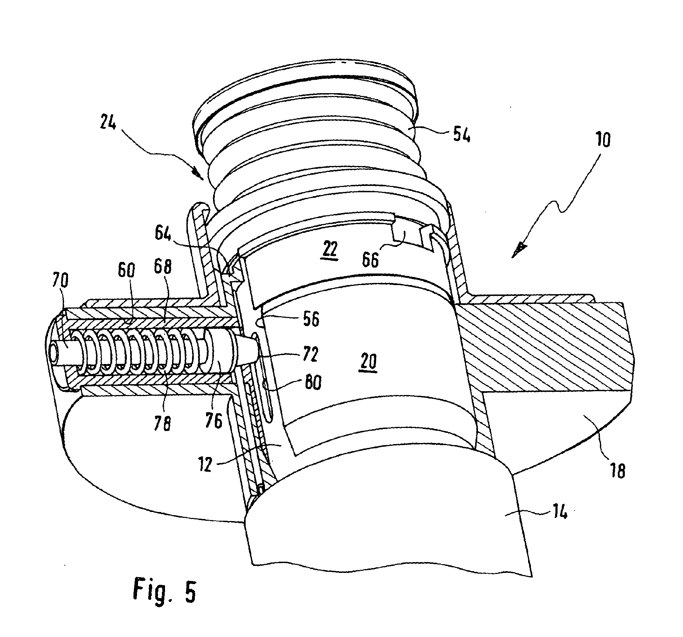

Aus Figur 3 ist deutlich erkennbar, dass die beiden Spannhülsen 20 und 22 jeweils mit einem Längsschlitz 56 und 58 versehen sind. Dieser Längsschlitz 56 beziehungsweise 58 erlaubt die problemlose Durchmesserveränderung, das heißt das Aufweiten der Spannhülse 22 beziehungsweise das Komprimieren der Spannhülse 20. Der Längsschlitz 56 weist dabei in Richtung einer Radialbohrung 60 des Modulträgers 18, in welche ein Arretierbolzen 62 einsetzbar ist. Die Funktion des Arretierbolzens 62 wird im Einzelnen zu den Figuren 4 und 5 beschrieben.

Aus Figur 3 ist noch erkennbar, dass die Aufnahmeöffnung 30 des Modulträgers 18 mit radial nach innen vorspringenden Schultern 64 versehen ist, die in Ausnahmen 66 an der zweiten Spannhülse 22 eingreifen. Hierdurch wird zum Einen ein Verdrehen der zweiten Spannhülse 22 verhindert, zum Anderen muss die Spannhülse von unten in den Modulträger 18 eingesetzt werden, sodass die Schultern 64 als Verliersicherung bezüglich der zweiten Spannhülse 22 bei auf das Mantelrohr 12 aufgesetztem Modulträger 18 dienen. Die Schultern 64 halten die beiden Spannhülsen 20 und 22 zwischen dem Modulträger 18 und dem Mantelrohr 20 sicher fest.

In den Figuren 4 und 5 ist der Arretierbolzen 62 in die Radialbohrung 60 des Modulträgers 18 eingesetzt. Der Arretierbolzen 62 weist eine Hülse 68 auf, in welcher ein Stift 70 axial verschieblich gelagert ist. Dieser Stift 70 weist einen verdickten Kopf auf, dessen freies Ende 72 kegelstumpfförmig zuläuft. An dieses freie Ende 72 schließt sich unmittelbar ein weiterer Kegelstumpf 74 an, dessen Neigung anders verläuft, als beim freien Ende 72. Um diesen Kegelstumpf 74 herum ist ein längsgeschlitzter Spannring 76 gelegt, dessen Innenoberfläche an den Kegelstumpf 74 angepasst ist und der als Spreizelement dient. Am Spannring 76 liegt eine Schraubenfeder 78 an, und drängt diesen Spannring 76 in Richtung des freien Endes 72. Aufgrund des Kegelstumpfes 74 wird dadurch der Spannring 76 aufgeweitet und liegt an der Innenoberfläche der Hülse 68 an. Auf diese Weise wird der Stift 70 spielfrei in der Hülse 68 gehalten.

Das freie Ende 72 des Stiftes 70 greift, wie deutlich aus Figur 5 erkennbar, in eine Längsnut 80 des Mantelrohrs 12 ein, wodurch eine Verdrehung des Lenksäulenmoduls 10 bezüglich des Mantelrohrs 12 verhindert wird.

## Patentansprüche

1. Auf einem Mantelrohr (12) befestigbares Lenksäulenmodul (10) mit einem Modulträger (18), welcher auf das Mantelrohr (12) aufschiebbar ist, **gekennzeichnet durch** eine erste Spannhülse (20) und eine zweite Spannhülse (22) sowie einem ein axiales Drucklager (48) aufweisenden Druckelement (24), wobei die Spannhülsen (20 und 22) und das Druckelement (24) axial hintereinander angeordnet sind, und die eine Spannhülse (20 oder 22) in wenigstens einem ihrer Stirnseitenbereiche (38 oder 44) eine kegelstumpfförmige Außenfläche (40) und die andere Spannhülse (22 oder 20) in ihrem der einen Spannhülse (20 oder 22) zugewandten Stirnseitenbereich (44 oder 38) eine kegelstumpfförmige Innenfläche (42) aufweisen, und die erste Spannhülse (20) mit ihrer kegelstumpfförmigen Außenfläche (40) in die kegelstumpfförmige Innenfläche (42) der zweiten Spannhülse (22) eingreift und die beiden Spannhülsen (20 und 22) zwischen dem Mantelrohr (12) und dem Modulträger (18) angeordnet sind.

2. Lenksäulenmodul nach Anspruch 1, **dadurch gekennzeichnet, dass** der Modulträger (18) an seinem einem Lenkrad (16) abgewandten Ende eine konische Verengung für eine kegelstumpfförmige Außenfläche (36) der ersten Spannhülse (20) aufweist.

3. Lenksäulenmodul nach einem der vorhergehenden Ansprüche, **dadurch gekennzeichnet, dass** die erste und/oder die zweite Spannhülse (20 und 22) mit einem achsparallel oder wendelförmig verlaufenden Schlitz (56 und 58) längsgeschlitzt ist.

4. Lenksäulenmodul nach einem der vorhergehenden Ansprüche, **dadurch gekennzeichnet, dass** die zweite Spannhülse (22) zwischen der ersten Spannhülse (20) und dem Druckelement (24) angeordnet ist.

5. Lenksäulenmodul nach einem der vorhergehenden Ansprüche, **dadurch gekennzeichnet, dass** das Druckelement (24) einem Lenkrad (16) zugewandt ist.

6. Lenksäulenmodul nach einem der vorhergehenden Ansprüche, **dadurch gekennzeichnet, dass** das Druckelement (24) mit einer Axialdruckfeder (54) versehen ist und komprimierbar ist.

7. Lenksäulenmodul nach einem der vorhergehenden Ansprüche, **dadurch gekennzeichnet, dass** die erste und/oder die zweite Spannhülse (20 und/oder 22) aus Metall, insbesondere Messing, oder aus Kunststoff, zum Beispiel Polyoxymethylen, Polyformaldehyd oder Polyacetal (POM) besteht, beziehungsweise bestehen.

8. Lenksäulenmodul nach einem der vorhergehenden Ansprüche, **dadurch gekennzeichnet, dass** der Modulträger (18) eine Axialbohrung (60) aufweist, in welche ein Arretierbolzen (62) einsetzbar ist, der in eine im Mantelrohr (12) vorgesehene Längsnut (80) eingreift.

9. Lenksäulenmodul nach Anspruch 8, **dadurch gekennzeichnet, dass** der Arretierbolzen (62) ein Spreizelement (76) aufweist, über welches er direkt oder indirekt in der Axialbohrung (60) spielfrei gehalten ist.

10. Lenksäulenmodul nach Anspruch 9, **dadurch gekennzeichnet, dass** das Spreizelement (76) federbelastet ist.

## Claims

1. A steering column module (10), which can be fastened to an jacket tube (12) and has a module support (18), which can be pushed onto the jacket tube (12), **characterized by** a first clamping sleeve (20) and a second clamping sleeve (22), as well as a thrust element (24) having an axial thrust bearing (48), wherein the clamping sleeves (20, 22) and the thrust element (24) are arranged axially behind each other, and the one clamping sleeve (20 or 22) has an exterior face (40) in the shape of a truncated cone in at least one of its front face areas (38 or 44), and the other clamping sleeve (22 or 20) has an interior face (42) in the shape of a truncated cone in its front face area (44 or 38) facing the clamping sleeve (20 or 22), and the first clamping sleeve (20) engages with its exterior face (40) in the shape of a truncated cone the interior face (42) in the shape of a truncated cone of the second clamping sleeve (22), and the two clamping sleeves (20, 22) are arranged between the jacket tube (12) and the module support (18).

2. The steering column module in accordance with claim 1, **characterized in that**, at its end facing away from a steering wheel (16), the module support (18) has a conical restriction for an exterior face (36) in the shape of a truncated cone of the first clamping sleeve (20).

3. The steering column module in accordance with one of the preceding claims, **characterized in that** the first and/or the second clamping sleeve (20 and 22) is longitudinally slit by a slit (56 and 58) extending axis-parallel and helically.

4. The steering column module in accordance with one of the preceding claims, **characterized in that** the second clamping sleeve (22) is arranged between the first clamping sleeve (20) and the thrust element (24).

5. The steering column module in accordance with one of the preceding claims, **characterized in that** the thrust element (24) faces a steering wheel (16).

6. The steering column module in accordance with one of the preceding claims, **characterized in that** the thrust element (24) is provided with an axial compression spring (54) and can be compressed.

7. The steering column module in accordance with one of the preceding claims, **characterized in that** the first and/or the second clamping sleeve (20 and/or 22) is, or are, made of metal, in particular brass, or of plastic, for example polyoxymethylene, polyformaldehyde or polyacetal (POM).

8. The steering column module in accordance with one of the preceding claims, **characterized in that** the module support (18) has an axial bore (60), into which an arresting bolt (62) can be inserted, which engages an elongated groove (80) provided in the jacket tube (12).

9. The steering column module in accordance with claim 8, **characterized in that** the arresting bolt (62) has a spreading element (76), by means of which it is directly or indirectly maintained in the axial bore (60) in a manner free of play.

10. The steering column module in accordance with claim 9, **characterized in that** the spreading element (76) is spring-loaded.

## Revendications

1. Module de colonne de direction (10) pouvant être fixé sur un tube enveloppe (12) comprenant un support de module (18), qui peut être introduit par glissement sur le tube enveloppe (12), **caractérisé par** une première douille de serrage (20) et une seconde douille de serrage (22), et un élément de pression (24) présentant un palier de pression (48) axial, les douilles de serrage (20 et 22) et l'élément de pression (24) étant disposés axialement les uns derrière les autres, et l'une des douilles de serrage (20 ou 22) et l'autre douille de serrage (22 ou 20) présentant respectivement une surface extérieure (40) en forme de cône tronqué dans au moins l'une de ses zones latérales frontales (38 ou 44) et une surface intérieure (42) en forme de cône tronqué dans sa zone latérale frontale (44 ou 38) associée à l'une des douilles de serrage (20 ou 22), et la première douille de serrage (20) s'engageant par sa surface extérieure (40) en forme de cône tronqué dans la surface intérieure (42) en forme de cône tronqué de la seconde douille de serrage (22) et les deux douilles de serrage (20 et 22) étant disposées entre le tube enveloppe (12) et le support de module (18).

2. Module de colonne de direction selon la revendication 1, **caractérisé en ce que** le support de module de support (18) présente sur son extrémité opposée à un volant (16) un rétrécissement conique pour une surface extérieure (36) en forme de cône tronqué de la première douille de serrage (20).

3. Module de colonne de direction selon l'une quelconque des revendications précédentes, **caractérisé en ce que** la première et/ou la seconde douille de serrage (20 et 22) est/sont fendue(s) dans la longueur avec une fente (56 et 58) agencée parallèlement en axe ou en forme d'hélice.

4. Module de colonne de direction selon l'une quelconque des revendications précédentes, **caractérisé en ce que** la seconde douille de serrage (22) est disposée entre la première douille de serrage (20) et l'élément de pression (24).

5. Module de colonne de direction selon l'une quelconque des revendications précédentes, **caractérisé en ce que** l'élément de pression (24) est associé à un volant (16).

6. Module de colonne de direction selon l'une quelconque des revendications précédentes, **caractérisé en ce que** l'élément de pression (24) est doté d'un ressort de pression axial (54) et peut être comprimé.

7. Module de colonne de direction selon l'une quelconque des revendications précédentes, **caractérisé en ce que** la première et/ou la seconde douille de serrage (20 et/ou 22) est/sont en métal, en particulier en laiton, ou en matière synthétique, par exemple en polyoxyméthylène, en polyformaldéhyde ou en polyacétal (POM).

8. Module de colonne de direction selon l'une quelconque des revendications précédentes, **caractérisé en ce que** le support de module (18) présente un percement axial (60) dans lequel un boulon de blocage (62) peut être inséré, lequel s'engage dans une rainure longitudinale (80) prévue dans le tube enveloppe (12).

9. Module de colonne de direction selon la revendication 8,
**caractérisé en ce que** le boulon de blocage (62) présente un élément d'écartement (76) par lequel il est maintenu sans jeu directement ou indirectement dans le percement axial (60).

10. Module de colonne de direction selon la revendication 9, **caractérisé en ce que** l'élément d'écartement (76) est sollicité par ressort.
